# EUROPEAN PATENT SPECIFICATION

(11) **EP 4 297 488 B1**
(45) Date of publication and mention of the grant of the patent: **22.04.2026**
(21) Application number: 21927206.9
(22) Date of filing: 25.02.2021
(51) Int. Cl.: H04W 48/02, H04W 48/04

(54) **WIRELESS COMMUNICATION METHOD, TERMINAL DEVICE, AND NETWORK DEVICE**
DRAHTLOSKOMMUNIKATIONSVERFAHREN, ENDGERÄTEVORRICHTUNG UND NETZWERKVORRICHTUNG
PROCÉDÉ DE COMMUNICATION SANS FIL, ÉQUIPEMENT TERMINAL ET DISPOSITIF DE RÉSEAU

(43) Date of publication of application: 27.12.2023
(73) Proprietor: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: Mewburn Ellis LLP
(86) International application number: PCT/CN2021/077920
(87) International publication number: WO 2022/178766

(56) References cited:
- WO-A1-2018/133606
- WO-A1-2019/035759
- WO-A1-2019/218926
- WO-A1-2020/199106
- WO-A1-2020/199106
- WO-A1-2020/221467
- WO-A1-2020/221467
- CA-A1- 3 135 445
- CN-A- 102 612 112
- CN-A- 103 188 764
- CN-A- 104 427 574
- CN-A- 109 792 435
- ZTE CORPORATION, SANECHIPS: "Understanding on the newly introduced Access Technology identifier for NTN", 3GPP DRAFT; R2-2101201, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20210125 - 20210205, 15 January 2021 (2021-01-15), Mobile Competence Centre ; 650, route des Lucioles ; F-06921 Sophia-Antipolis Cedex ; France , XP051974179

## Description

### TECHNICAL FIELD

Implementations of this disclosure relate to the field of communication, and more particularly to a wireless communication method, a terminal device, and a network device.

### BACKGROUND

Resources of an access network are limited. In order to reduce congestion caused by random access of a terminal to a cell, a unified access control (UAC) mechanism is introduced in a new radio (NR) system, so as to control conditional access of the terminal to the cell. Specifically, 64 access categories (ACs) associated with a service type of the terminal are defined in NR, and each AC corresponds to one set of access control parameters, so that a network side can control access of the terminal to the cell according to the service type.

In a non-terrestrial network (NTN) system, a coverage area of a satellite cell is much larger than that of a terrestrial cell. In general, increase in coverage range of a cell means proportional increase in the number (that is, quantity) of served terminals, but available bandwidth resources of the satellite cell do not increase proportionally with increase in coverage size of the cell. Although a probability of system resource congestion can be reduced by means of the existing service type-based UAC mechanism, the number of potential terminals served by the satellite cell is in huge increase, and therefore, even if the service type-based UAC mechanism is adopted, only some terminals using a corresponding service can be barred and a large number of other service terminals will still congest system resources, which will result in low resource utilization.

WO2020221467A1 relates to a wireless communication system, comprising: a plurality of time variant transmission points for communicating with auser device, UE, wherein the UE is ina tracking region, wherein the UE is configured to receive and store a list including identifiers, IDs, of time variant transmission points for the tracking region, and wherein the list includes IDs of time variant transmission points which are available or visible for the UE in the one tracking region at different times or time periods.

### SUMMARY

The invention is set out in the appended set of claims.

Implementations of the disclosure provide a wireless communication method, a terminal device, and a network device, which can realize efficient utilization of network resources.

With technical solutions of implementations of the disclosure, the target terminal can obtain the access-control configuration information, and perform cell access control according to the access-control configuration information, thereby realizing an access control mechanism. Compared with a service type-based unified access control (UAC) mechanism, in this access control mechanism, it is possible to explicitly indicate, according to an actual network condition, a terminal barred from accessing the target network or allowed to access the target network, which can reduce resource congestion caused by a large quantity of terminals accessing a network, thereby realizing efficient utilization of network resources.

### BRIEF DESCRIPTION OF THE DRAWINGS

FIG. 1A is a schematic architectural diagram of a communication system provided in implementations of the disclosure.
FIG. 1B is a schematic architectural diagram of another communication system provided in implementations of the disclosure.
FIG. 2 is an interaction flowchart of a wireless communication method provided in implementations of the disclosure.
FIG. 3 is a schematic block diagram of a terminal device 300 according to implementations of the disclosure.
FIG. 4 is a schematic block diagram of a network device 400 according to implementations of the disclosure.
FIG. 5 is a schematic structural diagram of a communication device 500 provided in implementations of the disclosure.
FIG. 6 is a schematic structural diagram of an apparatus according to implementations of the disclosure.
FIG 7 is a schematic block diagram of a communication system 700 provided in implementations of the disclosure.

### DETAILED DESCRIPTION

The following will describe technical solutions of implementations of the disclosure with reference to the accompanying drawings of the implementations of the disclosure. Apparently, implementations described herein are merely some implementations, rather than all implementations, of the disclosure. Based on the implementations described herein, all other implementations obtained by those of ordinary skill in the art without creative effort shall fall within the protection scope of the disclosure, provided that they fall under the scope of the appended claims.

Technical solutions of implementations of the disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5^{th} generation (5G) system, or other communication systems.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Implementations of the disclosure can also be applied to these communication systems.

Optionally, the communication system in implementations of the disclosure may be applied to a carrier aggregation (CA) scenario, a dual connectivity (DC) scenario, or a standalone (SA) network deployment scenario.

Optionally, implementations of the disclosure may be applied to an unlicensed spectrum, or may be applied to a licensed spectrum. An unlicensed spectrum may be regarded as a shared spectrum, and a licensed spectrum may be regarded as a non-shared spectrum.

Various implementations of the disclosure are described in connection with a network device and a terminal device. The terminal device can be a mobile phone, a pad, a computer with wireless transceiver functions, a virtual reality (VR) terminal device, an augmented reality (AR) terminal device, a wireless terminal in industrial control, an in-vehicle terminal device, a wireless terminal in self driving, a wireless terminal device in remote medicine, a wireless terminal device in smart grid, a wireless terminal device in transportation safety, a wireless terminal device in smart city, a wireless terminal device in smart home, a wearable terminal device, etc. The terminal device may also be referred to as a terminal, a user equipment (UE), an access terminal device, an in-vehicle terminal, a terminal in industrial control, a UE unit, a UE station, a mobile station, a remote station, a remote terminal device, a mobile device, a UE terminal device, a wireless communication device, a UE agent, or a UE apparatus, etc. The terminal device may be stationary or mobile.

By way of explanation rather than limitation, in implementations of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In implementations of the disclosure, the network device may be a device configured to communicate with a mobile device, and the network device may be an access point (AP) in a WLAN, a base transceiver station (BTS) in GSM or CDMA, may also be a NodeB (NB) in WCDMA, and may also be an evolutional Node B (eNB or eNodeB) in LTE, or a relay station or AP, or an in-vehicle device, a wearable device, a network device (gNB) in an NR network, a network device in a future evolved public land mobile network (PLMN), etc.

The network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In implementations of the disclosure, the network device provides services for a cell, and the terminal device communicates with the network device on a transmission resource (for example, a frequency-domain resource or a spectrum resource) for the cell. The cell may be a cell corresponding to the network device (for example, a base station). The cell may correspond to a macro base station, or may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

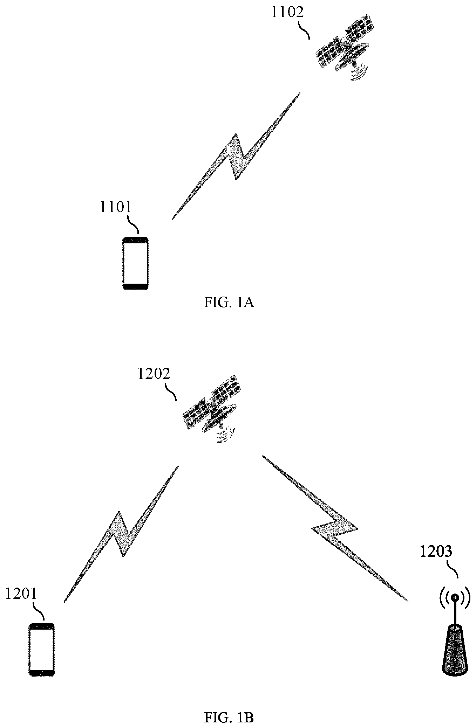

Exemplarily, the following describes an architecture of a communication system in the disclosure with reference to FIGs. 1A and 1B.

FIG. 1A is a schematic architectural diagram of a communication system provided in implementations of the disclosure. Referring to FIG. 1A, a terminal device 1101 and a satellite 1102 are included. The terminal device 1101 and the satellite 1102 can communicate wirelessly with each other. A network formed between the terminal device 1101 and the satellite 1102 may also be referred to as an NTN. In the architecture of the communication system illustrated in FIG. 1A, the satellite 1102 can function as a base station, and the terminal device 1101 and the satellite 1102 can communicate directly with each other, where the satellite 1102 is referred to as a regenerative satellite. In the system architecture, the satellite 1102 may be referred to as a network device. Optionally, there may be multiple network devices 1102 in the communication system, and there may be other quantities of terminal devices in the coverage of each network device 1102, and implementations of the disclosure are not limited in this regard.

FIG. 1B is a schematic architectural diagram of another communication system provided in implementations of the disclosure. Referring to FIG. 1B, a terminal device 1201, a satellite 1202, and a base station 1203 are included. The terminal device 1201 and the satellite 1202 can communicate wirelessly with each other, and the satellite 1202 and the base station 1203 can communicate with each other. A network formed between the terminal device 1201, the satellite 1202, and the base station 1203 may also be referred to as an NTN. In the architecture of the communication system illustrated in FIG. 1B, the satellite 1202 may not function as a base station, and communication between the terminal device 1201 and the base station 1203 needs to be relayed via the satellite 1202, where the satellite 1202 is referred to as a relay satellite. In such a system architecture, the base station 1203 may be referred to as a network device. Optionally, there may be multiple network devices 1203 in the communication system, and there may be other quantities of terminal devices in the coverage of each network device 1203, and implementations of the disclosure are not limited in this regard.

Optionally, the wireless communication system illustrated in FIGs. 1A and 1B may further include other network entities such as a mobility management entity (MME), an access and mobility management function (AMF), etc., and implementations of the disclosure are not limited in this regard.

It should be understood that, the terms "system" and "network" herein are usually used interchangeably throughout this disclosure. The term "and/or" herein only describes an association relationship between associated objects, for example, there can be three relationships between associated objects. For example, A and/or B can mean A alone, both A and B exist, and B alone. The character "/" herein generally indicates that the associated objects are in an "or" relationship.

In the elaboration of implementations of the disclosure, the term "correspondence" may mean that there is a direct or indirect correspondence between the two, may mean that there is an association between the two, or may mean a relationship of indicating and indicated or configuring and configured, etc.

To clearly illustrate the concept of implementations of the disclosure, a brief introduction will be given firstly to the related art of the implementations of the disclosure. The implementations of the disclosure include at least some of the following.

### I. Non-public network (NPN), stand-alone non-public network (SNPN), and closed access group (CAG) network

The NPN is introduced in NR release 16 (R16). In order to improve flexibility in NPN deployment, the NPN can be classified into an SNPN and a CAG network, where the SNPN is determined according to a PLMN identity (ID) and a network identity (NID), and the CAG network is determined according to a PLMN ID and a CAG identifier (CAG ID). Taking the SNPN as an example, a PLMN ID and an NID may be used as an SNPN identifier, and a subscriber subscribing to a certain SNPN service may be configured with a corresponding subscriber permanent identifier (SUPI) and subscription information, where the corresponding SUPI and the subscription information are stored in a terminal device and a core-network side. A subscriber subscribing to an SNPN service is required to support an SNPN access mode. A subscriber set to operate in the SNPN access mode can access a network only through the SNPN, and a subscriber not set to operate in the SNPN access mode can perform a PLMN selection procedure. The configuration (activation, deactivation, etc.) of the SNPN access mode is up to implementation of the terminal device. In an initial access and cell re-selection procedure, an access-network device needs to broadcast an NID supported by the access-network device and a corresponding PLMN ID, and the subscriber set to operate in the SNPN access mode can select an accessible SNPN cell according to subscription information of the subscriber. A core-network device can also authenticate an identity of the subscriber according to the subscription information of the subscriber.

A PLMN can be shared by any combination of a common public network, an SNPN, and a CAG network. For example, a PLMN may be shared by a common public network, an SNPN, or a CAG network; or may be shared by a combination of a common public network and an SNPN; or may even be shared by a combination of a common public network, an SNPN, and a CAG network. In other words, a common public network(s), an SNPN(s), or a CAG network(s) may share a PLMN, or a common public network and an SNPN may share a PLMN, or even a common public network, an SNPN, and a CAG network may share a PLMN. The following will describe more clearly a logical deployment relationship among a common public network, an SNPN, and a CAG network in connection with table 1.

**Table 1: Schematic NID configurations that a cell may support**

| | | | |
|---|---|---|---|
| NID broadcast by a cell | PLMN ID list | PLMN ID 1 | |
| | | PLMN ID 2 | |
| | | ...... | |
| | | PLMN ID *N* | |
| | NPN ID list (optional) | PLMN ID *N+1* | CAG ID list 1 |
| | | PLMN ID N+2 | CAG ID list 2 |
| | | ...... | ...... |
| | | PLMN ID *N+M* | CAG ID list *M* |
| | | PLMN ID *N+M+1* | NID list 1 |
| | | PLMN ID *N+M+2* | NID list 2 |
| | | ...... | ...... |
| | | PLMN ID *N+M+W* | NID list *W* |

As shown in table 1, from the perspective of network configuration, a cell can be configured with both a PLMN ID list and an NPN ID list, where the NPN ID list is an optional parameter introduced in NR R16. For a CAG-type NPN, one PLMN ID is allowed to be associated with one CAG ID list. For an SNPN-type NPN, one PLMN ID is allowed to be associated with one NID list.

Parameters *N, M,* and *W* in table 1 each are a positive integer greater than or equal to 1.

### II. Unified access control (UAC) mechanism

As stated above, resources of an access network are limited. In order to reduce congestion caused by random access of a terminal to a cell, a UAC mechanism is introduced in an NR system, so as to control conditional access of the terminal to the cell. Specifically, 64 access categories (ACs) associated with a service type of the terminal are defined in NR, and each AC corresponds to one set of access control parameters, so that a network side can control access of the terminal to the cell according to the service type.

A UAC parameter may be configured at cell granularity (namely, all PLMNs shared by a cell share the UAC parameter) or configured at PLMN granularity. For details thereof, reference can be made to table 2 and table 3.

**Table 2: Schematic UAC parameters configured at cell granularity**

| Information of shared PLMNs of a cell | AC information | AC-granularity access control parameter |
|---|---|---|
| PLMN 1~PLMN *N* | AC 0 | Access control parameter 1 |
| | AC 1 | Access control parameter 2 |
| | ...... | ...... |
| | AC 63 | Access control parameter 64 |

As shown in table 2, all PLMNs shared by a cell share a set of common UAC parameters, where the UAC parameter includes AC information and an access control parameter associated with the corresponding AC. Generally, the access control parameter includes parameters such as an access control probability, an access barring duration, and an access identity for the terminal, etc.

**Table 3: Schematic UAC parameter configured at PLMN granularity**

| Information of PLMNs shared by a cell | AC information | AC-granularity access control parameter |
|---|---|---|
| PLMN 1 | AC 0 | Access control parameter 1 |
| | AC 1 | Access control parameter 2 |
| | ...... | ...... |
| | AC 63 | Access control parameter 64 |
| PLMN 2 | AC 0 | Access control parameter 1 |
| | AC 1 | Access control parameter 2 |
| | ...... | ...... |
| | AC 63 | Access control parameter 64 |

In table 3, a cell exemplarily has two shared PLMNs. Each PLMN is configured with a separate set of UAC parameters. The UAC parameter includes AC information and an access control parameter associated with the corresponding AC. Generally, the access control parameter includes parameters such as an access control probability, an access barring duration, and an access identity for the terminal, etc.

As described above, in an NTN system, a coverage area of a satellite cell is much larger than that of a terrestrial cell. In general, increase in coverage range of a cell means proportional increase in the number (that is, quantity) of served terminals, but available bandwidth resources of the satellite cell do not increase proportionally with increase in coverage size of the cell. Although a probability of system resource congestion can be reduced by means of the existing service type-based UAC mechanism, the number of potential terminals served by the satellite cell is in huge increase, and therefore, even if the service type-based UAC mechanism is adopted, only some terminals using a corresponding service can be barred and a large number of other service terminals will still congest system resources, which will result in low resource utilization.

Technical solutions of the disclosure will be described in detail below.

### Implementation 1

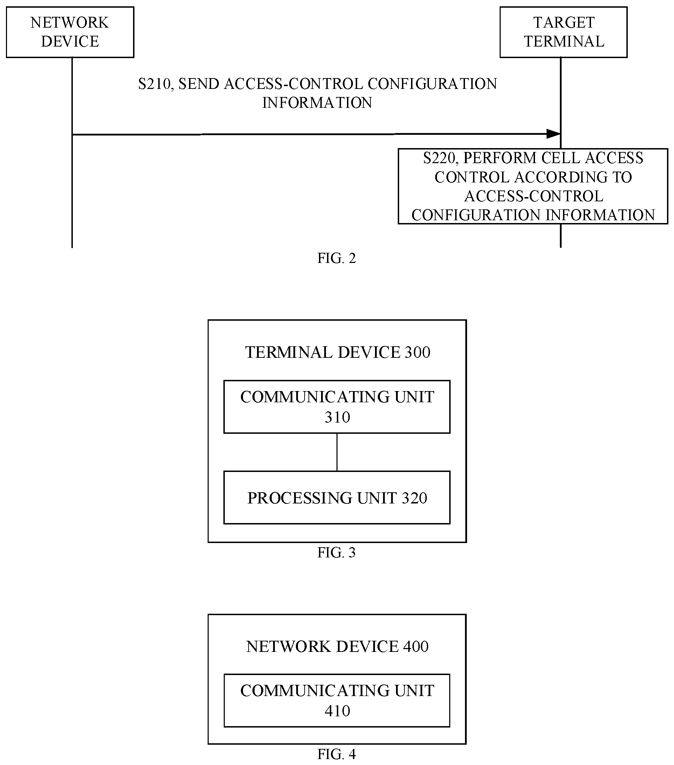

FIG. 2 is an interaction flowchart of a wireless communication method provided in implementations of the disclosure. An execution entity involved in the method includes a target terminal and a network device. As illustrated in FIG. 2, the method includes the following.

S210, the network device sends access-control configuration information.

S220, the target terminal performs cell access control according to the access-control configuration information.

The access-control configuration information indicates information related to a terminal barred from accessing a target network or allowed to access the target network. It should be understood that, the terminal herein may be one terminal or multiple terminals, and the terminal does not specifically refer to the target terminal above.

Optionally, if the access-control configuration information indicates information related to a terminal barred from accessing the target network, assuming that the target terminal determines, according to the access-control configuration information, that the target terminal is barred from accessing the target network, the target terminal may further determine, according to a corresponding intra-frequency cell search indicator bit in a master information block (MIB) of the target network, whether the target terminal can search for other cells at the same frequency as the target network. Alternatively, the target terminal may directly ignore the corresponding intra-frequency cell search indicator bit in the MIB of the target network, and consider that the target terminal can search for other cells at the same frequency as the target network, or consider that the target terminal cannot search for other cells at the same frequency as the target network in a time period.

It should be understood that, there are two cases regarding the access-control configuration information being indicative of information related to a terminal allowed to access the target network. In one case, the access-control configuration information is indicative of information related to a terminal always allowed to access the target network, in other words, as long as the target terminal determines, according to the access-control configuration information, that the target terminal is allowed to access the target network, the target terminal can access the target network. In the other case, the access-control configuration information is indicative of information related to a terminal conditionally allowed to access the target network, that is, even if the target terminal determines, according to the access-control configuration information, that the target terminal is allowed to access the target network, the target terminal further needs to take other factors into consideration to determine whether the target terminal can access the target network, for example, the target terminal determines, according to a probability configuration parameter for the target terminal to access the target network, whether the target terminal can access the target network.

Optionally, the target network may be a registered network of the target terminal, that is, an operator network that the target terminal subscribes to, or may be a network equivalent to the registered network, and the disclosure is not limited in this regard.

Optionally, the access-control configuration information includes an ID of the target network.

Optionally, the target network is any one of, but is not limited to, a PLMN network, an SNP network, or a CAG network.

Optionally, the access-control configuration information is carried in a system broadcast message or dedicated signaling.

Optionally, the dedicated signaling may be radio resource control (RRC) setup signaling, RRC re-establishment signaling, etc., and the disclosure is not limited in this regard.

It should be understood that, if the target terminal determines, according to the access-control configuration information, that the target terminal is barred from accessing the target network, the target terminal will not access the target network. If the target terminal determines, according to the access-control configuration information, that the target terminal is allowed to access the target network, the target terminal will access the target network, or the target terminal will determine, further according to the probability configuration parameter for the target terminal to access the target network, whether the target terminal can access the target network.

Optionally, the target terminal may obtain the access-control configuration information via an access stratum (AS), and may transfer the access-control configuration information to a non-access stratum (NAS) via the AS.

In the disclosure, the target terminal can obtain the access-control configuration information, and perform cell access control according to the access-control configuration information, thereby realizing an access control mechanism. Compared with a service type-based UAC mechanism, in this access control mechanism, it is possible to explicitly indicate, according to an actual network condition, a terminal barred from accessing the target network or allowed to access the target network. For example, the network device may indicate a terminal of terminal type A to access the target network, or may indicate to bar terminals of terminal types other than terminal type A from accessing the target network, which can reduce resource congestion caused by a large quantity of terminals accessing a network, thereby realizing efficient utilization of network resources.

### Implementation 2

Optionally, the access-control configuration information includes at least one of, but is not limited to, information of a type of a terminal ("terminal type" for short) barred from accessing the target network or allowed to access the target network, geographic region information of the terminal barred from accessing the target network or allowed to access the target network, or information related to a serving cell of the terminal barred from accessing the target network or allowed to access the target network.

It should be understood that, in the disclosure, there are two cases regarding information of a terminal type allowed to access the target network. In one case, the information of the terminal type allowed to access the target network refers to information of a terminal type always allowed to access the target network, that is, as long as the target terminal is the terminal type allowed to access the target network, the target terminal can access the target network. In the other case, the information of the terminal type allowed to access the target network refers to information of a terminal type conditionally allowed to access the target network, that is, even if the target terminal is the terminal type allowed to access the target network, the target terminal further needs to take other factors into consideration to determine whether the target terminal can access the target network. For example, the target terminal determines, according to the probability configuration parameter for the target terminal to access the target network, whether the target terminal can access the target network.

Similarly, there are two cases regarding geographic region information of a terminal allowed to access the target network. In one case, the geographic region information of the terminal allowed to access the target network refers to geographic region information of a terminal always allowed to access the target network, that is, as long as the target terminal is within a geographic region of the terminal allowed to access the target network, the target terminal can access the target network. In the other case, the geographic region information of the terminal allowed to access the target network refers to geographic region information of a terminal conditionally allowed to access the target network, that is, even if the target terminal is within the geographic region of the terminal allowed to access the target network, the target terminal further needs to take other factors into consideration to determine whether the target terminal can access the target network. For example, the target terminal determines, according to the probability configuration parameter for the target terminal to access the target network, whether the target terminal can access the target network.

Similarly, there are two cases regarding information related to a serving cell of a terminal allowed to access the target network. In one case, the information related to the serving cell of the terminal allowed to access the target network refers to information related to a serving cell of a terminal always allowed to access the target network, that is, as long as information related to a serving cell of the target terminal is consistent with the information related to the serving cell of the terminal allowed to access the target network, the target terminal can access the target network. In the other case, the information related to the serving cell of the terminal allowed to access the target network refers to information related to a serving cell of a terminal conditionally allowed to access the target network, that is, even if the information related to the serving cell of the target terminal is consistent with the information related to the serving cell of the terminal allowed to access the target network, the target terminal further needs to take other factors into consideration to determine whether the target terminal can access the target network. For example, the target terminal determines, according to the probability configuration parameter for the target terminal to access the target network, whether the target terminal can access the target network.

Optionally, the terminal type is classified according to at least one of, but not limited to, the following dimensions: 1. a maximum transmission power level supported by the terminal; 2. an application scenario supported by the terminal; 3. a bandwidth size supported by the terminal; 4. whether the terminal is served (i. e., is provided with service) in an operator network that the terminal subscribes to; 5. the number (that is, quantity) of transmit antennas and/or the number of receive antennas supported by the terminal.

Optionally, the above classifications of the terminal type may be predefined in a standard, and the disclosure is not limited in this regard.

Optionally, a maximum transmission power level may be classified into different maximum transmission power ranges according to the maximum transmission power level supported by the terminal, and each range corresponds to one terminal type. Exemplarily, a terminal with a maximum transmission power less than *a* is classified into one type, a terminal with a maximum transmission power greater than or equal to *a* and less than or equal to *b* is classified into another type, and a terminal with a maximum transmission power greater than or equal to *b* is classified into still another type.

It should be noted that, in the disclosure, there is no limitation on the quantity of maximum transmission power ranges for the maximum transmission power level and how to classify the maximum transmission power level into maximum transmission power ranges.

Optionally, in the disclosure, application scenarios of the terminal may be classified at different dimensions. For example, the application scenario of the terminal may be classified into three types according to whether the terminal supports only terrestrial communication, supports only satellite communication, or supports both terrestrial communication and satellite communication. Alternatively, the application scenario of the terminal may be classified into three types according to whether the terminal supports only a stationary scenario, supports only a mobile scenario, or supports both a static scenario and a mobile scenario. As such, the terminal can be classified into different types according to different application scenarios. Exemplarily, a terminal that supports only terrestrial communication is classified into one type, a terminal that supports only satellite communication is classified into another type, and a terminal that supports both terrestrial communication and satellite communication is classified into still another type. Alternatively, a terminal that supports only a stationary scenario is classified into one type, a terminal that supports only a mobile scenario is classified into another type, and a terminal that supports both a stationary scenario and a mobile scenario is classified into still another type.

Optionally, bandwidths may be classified into different bandwidth ranges according to the bandwidth supported by the terminal, where each range corresponds to one terminal type. Exemplarily, a terminal having a bandwidth less than c is classified into one type, a terminal having a bandwidth greater than or equal to c and less than or equal to *d* is classified into another type, and a terminal having a bandwidth greater than or equal to *d* is classified into still another type.

It should be understood that, classification of the terminal type according to whether the terminal is served in the operator network that the terminal subscribes to is also referred to as classification according to a relationship between an operator network actually found by the terminal and the operator that the terminal subscribes to. In other words, there are two terminal types. One terminal type refers to a terminal served in the operator network that the terminal subscribes to, and this terminal type is referred to as terminal type 1. The other terminal type refers to a terminal not served in the operator network that the terminal subscribes to, and this terminal type is referred to as terminal type 2.

Exemplarily, assuming that terminal *A* subscribes to PLMN 1 and terminal *A* is served in PLMN 1, terminal *A* is terminal type 1. If terminal *B* subscribes to PLMN 2 and terminal *B* is not served in PLMN 2, terminal *B* is terminal type 2.

The following will give an exemplary illustration of determining the terminal type according to the number of transmit antennas supported by the terminal. For the method for determining the terminal type according to the number of receive antennas supported by the terminal or according to the number of transmit antennas and the number of receive antennas supported by the terminal, reference can be made to the method for determining the terminal type according to the number of transmit antennas supported by the terminal, which will not be describe in detail in the disclosure.

Exemplarily, a terminal of which the number of transmit antennas is less than e is classified into one type, a terminal of which the number of transmit antennas is greater than or equal to *e* and less than or equal to *f* is classified into another type, and a terminal of which the number of transmit antennas is greater than or equal to *f* is classified into still another type.

It should be noted that, items 1~5 for determining the terminal type may be randomly combined, for example, a terminal of which the maximum transmission power level is P1 and the bandwidth supported is B1 is defined as one terminal type, and a terminal of which the maximum transmission power level is P2 and the bandwidth supported is B2 is defined as another terminal type. Other combinations will not be elaborated in the disclosure.

Optionally, the geographic region information includes coordinate information of multiple reference points, or latitude-longitude range information. The multiple reference points may constitute a geographic region. A geographic region may also be constituted according to the latitude-longitude range information.

Exemplarily, assuming that there are four reference points, namely D1, D2, D3, and D4, and the four reference points are connected to constitute a geographic region.

Exemplarily, assuming that four pieces of latitude-longitude range information are configured, namely C1 degrees east longitude, C2 degrees east longitude, C3 degrees north latitude, and C4 degrees south latitude, and the four pieces of latitude-longitude range information constitute a geographic region.

Optionally, the information related to the serving cell of the terminal includes at least one of, but is not limited to, a cell global identity (CGI), a tracking area code (TAC) ID, a radio access network area code (RANAC) ID, frequency-point information, a physical cell identity (PCI), beam information, bandwidth configuration information, radio access technology (RAT) information, or core-network type information.

It should be understood that, the target terminal can be barred from accessing the target network or allowed to access the target network only if the information related to the serving cell of the target terminal is consistent with the information related to the serving cell of the terminal carried in the access-control configuration information. For example, assuming that the information related to the serving cell of the terminal includes CGI 1 and the access-control configuration information indicates information related to the terminal allowed to access the target network, the target terminal can access the target network only if a CGI of the target terminal is CGI 1.

It should be understood that, various configurations included in the information related to the serving cell of the terminal may be at the same level (that is, in parallel relationship), or may be at different levels (that is, in hierarchy relationship). For example, the CGI and the TAC ID are at the same level, and the frequency-point information and the PCI are at different levels, as shown in table 4.

**Table 4: Schematic configuration relationship between frequency-point information and PCI**

| | |
|---|---|
| Frequency point 1 | PCI 1 |
| | PCI 2 |
| Frequency point 2 | PCI 3 |
| | PCI 4 |

As described above, the information related to the terminal allowed to access the target network indicated by the access-control configuration information may be information related to a terminal conditionally allowed to access the target network. In this case, optionally, if the access-control configuration information indicates the information related to the terminal allowed to access the target network, the access-control configuration information further includes access-probability-control configuration information for the terminal to access the target network.

It should be noted that, none of the terminals in the disclosure specifically refer to a certain terminal such as the target terminal described above.

Optionally, the access-probability-control configuration information includes a probability configuration parameter for the terminal to access the target network. For example, if a probability for the terminal accesses the target network is 0.8, it indicates the terminal accesses the target network with an 80% probability each time.

Optionally, the access-probability-control configuration information further includes a back-off time parameter, where the back-off time parameter is used for determining a minimum waiting duration required before re-initiating a service after the terminal fails to access the target network. The back-off time parameter may also be substituted into a formula to calculate a new minimum waiting duration. For example, if the back-off time parameter is 1 second, the service can be re-initiated only after waiting for 1 second after the service initiated by the terminal is barred, or the service can be re-initiated only after waiting for 0.6 * 1 second. The service restricted by the back-off time parameter can be a service of the terminal previously barred, or may be a new service, and the disclosure is not limited in this regard.

Optionally, the information of the terminal type and the access-probability-control configuration information are in one-to-one correspondence or multiple-to-one correspondence. For example, table 5 shows a schematic one-to-one mapping between the information of the terminal type and the access-probability-control configuration information, and table 6 shows a schematic multiple-to-one mapping between the information of the terminal type and the access-probability-control configuration information.

**Table 5: Schematic one-to-one mapping between information of terminal type and access-probability-control configuration information**

| | |
|---|---|
| Terminal type 1 | First set of access-probability-control configuration information |
| Terminal type 2 | Second set of access-probability-control configuration information |
| ...... | ...... |
| Terminal type *N* | *N*^{th} set of access-probability-control configuration information |

**Table 6: Schematic multiple-to-one mapping between information of terminal type and access-probability-control configuration information**

| | |
|---|---|
| Terminal type 1 | First set of access-probability-control configuration information |
| Terminal type 2 | Second set of access-probability-control configuration information |
| Terminal type 3 | |
| Terminal type 4 | Third set of access-probability-control configuration information |
| Terminal type 5 | |
| Terminal type 6 | |
| Terminal type 7 | |

Optionally, the geographic region information and the access-probability-control configuration information are in one-to-one correspondence or multiple-to-one correspondence. For example, table 7 shows a schematic one-to-one mapping between the geographic region information and the access-probability-control configuration information, and table 8 shows a schematic multiple-to-one mapping between the geographic region information and the access-probability-control configuration information.

**Table 7: Schematic one-to-one mapping between geographic region information and access-probability-control configuration information**

| | |
|---|---|
| Geographic region 1 | First set of access-probability-control configuration information |
| Geographic region 2 | Second set of access-probability-control configuration information |
| ...... | ...... |
| Geographic region *N* | *N*^{th} set of access-probability-control configuration information |

**Table 8: Schematic multiple-to-one mapping between geographic region information and access-probability-control configuration information**

| | |
|---|---|
| Geographic region 1 | First set of access-probability-control configuration information |
| Geographic region 2 | Second set of access-probability-control configuration information |
| Geographic region 3 | |
| Geographic region 4 | Third set of access-probability-control configuration information |
| Geographic region 5 | |
| Geographic region 6 | |
| Geographic region 7 | |

Optionally, the information related to the serving cell of the terminal and the access-probability-control configuration information are in one-to-one correspondence or multiple-to-one correspondence. For example, table 9 shows a schematic one-to-one mapping between the information related to the serving cell of the terminal and the access-probability-control configuration information, and table 10 shows a schematic multiple-to-one mapping between the information related to the serving cell of the terminal and the access-probability-control configuration information.

**Table 9: Schematic one-to-one mapping between information related to serving cell of terminal and access-probability-control configuration information**

| | |
|---|---|
| Information 1 related to serving cell of terminal | First set of access-probability-control configuration information |
| Information 2 related to serving cell of terminal | Second set of access-probability-control configuration information |
| ...... | ...... |
| Information *N* related to serving cell of terminal | *N*^{th} set of access-probability-control configuration information |

**Table 10: Schematic multiple-to-one mapping between information related to serving cell of terminal and access-probability-control configuration information**

| | |
|---|---|
| Information 1 related to serving cell of terminal | First set of access-probability-control configuration information |
| Information 2 related to serving cell of terminal | Second set of access-probability-control configuration information |
| Information 3 related to serving cell of terminal | |
| Information 4 related to serving cell of terminal | Third set of access-probability-control configuration information |
| Information 5 related to serving cell of terminal | |
| Information 6 related to serving cell of terminal | |
| Information 7 related to serving cell of terminal | |

In the disclosure, the target terminal can obtain the access-control configuration information, and perform various cell access control according to the access-control configuration information. For example, an access control mechanism is realized based on the terminal type, the geographic region information of the terminal, and the information related to the serving cell of the terminal. Compared with a service type-based UAC mechanism, in this access control mechanism, it is possible to explicitly indicate, according to an actual network condition, a terminal barred from accessing the target network or allowed to access the target network. For example, the network device may indicate a terminal of terminal type A to access the target network, or may indicate to bar terminals of terminal types other than terminal type A from accessing the target network, which can reduce resource congestion caused by a large quantity of terminals accessing a network, thereby realizing efficient utilization of network resources.

### Implementation 3

Optionally, any item in the access-control configuration information is configured at any one of, but not limited to, the following granularities: cell granularity, PLMN granularity, SNPN granularity, CAG granularity, or AC granularity.

As stated above, the access-control configuration information may also include the ID of the target network. For example, the ID of the target network is referred to as first configuration information, the information of the terminal type barred from accessing the target network or allowed to access the target network is referred to as second configuration information, the geographic region information of the terminal barred from accessing the target network or allowed to access the target network is referred to as third configuration information, the information related to the serving cell of the terminal barred from accessing the target network or allowed to access the target network is referred to as fourth configuration information, and the access-probability-control configuration information for the terminal to access the target network is referred to as fifth configuration information. Regarding each information in the access-control configuration information, configurations at the several granularities mentioned above will be illustrated below.

**Table 11: Schematic configuration at cell granularity**

| |
|---|
| First configuration information |
| Second configuration information |
| Third configuration information |
| Fourth configuration information |
| Fifth configuration information |

As shown in table 11, the second configuration information to the fifth configuration information are all configured in parallel with the first configuration information. Since the first configuration information is configuration information at the cell granularity, the second configuration information to the fifth configuration information each are also configuration information at the cell granularity.

**Table 12: Schematic configuration at PLMN/SNPN granularity**

| | |
|---|---|
| PLMN 1/SNPN 1 | Second configuration information 1~fifth configuration information 1 |
| PLMN 2/SNPN 2 | Second configuration information 2~fifth configuration information 2 |
| ...... | ...... |
| PLMN *N*/SNPN *N* | Second configuration information *N*~fifth configuration information *N* |

As shown in table 12, the second configuration information to the fifth configuration information are configured at a lower-level relative to PLMN/SNPN information, and accordingly, the second configuration information to the fifth configuration information are configured at the PLMN/SNPN granularity.

**Table 13: Schematic configuration at CAG granularity**

| | | |
|---|---|---|
| PLMN 1 | CAG 11 | Second configuration information 11~fifth configuration information 11 |
| | CAG 12 | Second configuration information 12~fifth configuration information 12 |
| | ...... | ...... |
| | CAG 1*N* | Second configuration information 1*N*~fifth configuration information 1*N* |
| PLMN 2 | CAG 21 | Second configuration information 21~fifth configuration information 21 |
| | CAG22 | Second configuration information 22~fifth configuration information 22 |
| | ...... | ...... |
| | CAG 2*M* | Second configuration information 2*M*~fifth configuration information 2M |

As shown in table 13, CAG is configured at a lower-level relative to PLMN while the second configuration information to the fifth configuration information are configured at a lower level relative to CAG, and accordingly, the second configuration information to the fifth configuration information are configured at the CAG granularity.

**Table 14: Schematic configuration at AC granularity**

| | |
|---|---|
| AC 1 | Second configuration information 1~fifth configuration information 1 |
| AC 2 | Second configuration information 2~fifth configuration information 2 |
| ...... | ...... |
| AC *N* | Second configuration information *N*~fifth configuration information *N* |

Optionally, if any item in the access-control configuration information is configured at the AC granularity, the access-control configuration information further includes an AC ID.

Optionally, the AC ID and the access-probability-control configuration information are in one-to-one correspondence or multiple-to-one correspondence.

It should be noted that, if the AC ID and the access-probability-control configuration information are in one-to-one correspondence, there are two configuration modes. In mode 1, the AC ID is explicitly configured, and in this case, each explicit AC ID corresponds to one set of access-probability-control configuration information. In mode 2, the AC ID is absent, and instead, 64 sets of access-probability-control configuration information are configured by default. As to the order of configuration, a first set of access-probability-control configuration information corresponds to AC 0, a second set of access-probability-control configuration information corresponds to AC 1, and so forth, and a 64^{th} set of access-probability-control configuration information corresponds to AC 63. The access-probability-control configuration information in mode 2 is also configured at the AC granularity but implemented implicitly, and the disclosure is not limited in this regard.

For example, table 15 shows a schematic one-to-one mapping between the AC ID and the access-probability-control configuration information, and table 16 shows a schematic multiple-to-one mapping between the AC ID and the access-probability-control configuration information.

**Table 15: Schematic one-to-one mapping between AC ID and access-probability-control configuration information**

| | |
|---|---|
| AC 1 | First set of access control parameters |
| AC 2 | Second set of access control parameters |
| ...... | ...... |
| AC *N* | *N*^{th} set of access control parameters |

**Table 16 : Schematic multiple-to-one mapping between AC ID and access-probability-control configuration information**

| | |
|---|---|
| AC 1 | First set of access control parameters |
| AC 2 | Second set of access control parameters |
| AC 3 | |
| AC 4 | Third set of access control parameters |
| AC 5 | |
| AC 6 | |
| AC 7 | |

In the disclosure, any information in the access-control configuration information is configured at any one of the cell granularity, the PLMN granularity, the SNPN granularity, the CAG granularity, or the AC granularity, which is possible to improve flexibility in configuration of the access-control configuration information.

### Implementation 4

Optionally, if the access-control configuration information is carried in the dedicated signaling, the access-control configuration information further includes timer information. The access-control configuration information in the dedicated signaling is valid before expiry of the timer; otherwise, the access-control configuration information in the dedicated signaling is invalid.

Optionally, if the access-control configuration information is carried in the dedicated signaling and the access-control configuration information in the dedicated signaling is invalid, that is, the access-control configuration information is carried in the dedicated signaling and the timer expires, the target terminal will perform cell access control according to the access-control configuration information carried in the system broadcast message.

To summarize, in the disclosure, if the access-control configuration information is carried in the dedicated signaling and the access-control configuration information in the dedicated signaling is invalid, the target terminal will perform cell access control according to the access-control configuration information carried in the system broadcast message, thereby improving reliability of cell access control.

The method implementations of the disclosure are described in detail above with reference to FIG. 2, and apparatus implementations of the disclosure will be described in detail below with reference to FIG. 3 to FIG. 8. It should be understood that, apparatus implementations and method implementations correspond to each other, and for similar illustration, reference can be made to the method implementations.

### Implementation 5

FIG. 3 is a schematic block diagram of a terminal device 300 according to implementations of the disclosure. As illustrated in FIG. 3, the terminal device 300 includes a communicating unit 310 and a processing unit 320. The communicating unit 310 is configured to obtain access-control configuration information. The processing unit 320 is configured to perform cell access control according to the access-control configuration information, where the access-control configuration information indicates information related to a terminal barred from accessing a target network or allowed to access the target network.

Optionally, the access-control configuration information includes at least one of: information of a terminal type barred from accessing the target network or allowed to access the target network, geographic region information of the terminal barred from accessing the target network or allowed to access the target network, or information related to a serving cell of the terminal barred from accessing the target network or allowed to access the target network.

Optionally, if the access-control configuration information indicates information related to a terminal allowed to access the target network, the access-control configuration information further includes access-probability-control configuration information for the terminal to access the target network.

Optionally, the access-probability-control configuration information includes a probability configuration parameter for the terminal to access the target network.

Optionally, the access-probability-control configuration information further includes a back-off time parameter, where the back-off time parameter is used for determining a minimum waiting duration required before re-initiating a service after the terminal fails to access the target network.

Optionally, the information of the terminal type and the access-probability-control configuration information are in one-to-one correspondence or multiple-to-one correspondence.

Optionally, the geographic region information and the access-probability-control configuration information are in one-to-one correspondence or multiple-to-one correspondence.

Optionally, the information related to the serving cell of the terminal and the access-probability-control configuration information are in one-to-one correspondence or multiple-to-one correspondence.

Optionally, any item in the access-control configuration information is configured at any one of: cell granularity, PLMN granularity, SNPN granularity, CAG granularity, or AC granularity.

Optionally, if any item in the access-control configuration information is configured at the AC granularity, the access-control configuration information further includes an AC ID.

Optionally, the AC ID and the access-probability-control configuration information are in one-to-one correspondence or multiple-to-one correspondence.

Optionally, the terminal type is classified according to at least one of a maximum transmission power level supported by the terminal, an application scenario supported by the terminal, a bandwidth size supported by the terminal, whether the terminal is served in an operator network that the terminal subscribes to, or the number of transmit antennas and/or the number of receive antennas supported by the terminal.

Optionally, the geographic region information includes coordinate information of multiple reference points, or latitude-longitude range information.

Optionally, the information related to the serving cell of the terminal includes at least one of a CGI, a TAC ID, a RANAC ID, frequency-point information, a PCI, beam information, bandwidth configuration information, RAT information, or core-network type information.

Optionally, the access-control configuration information further includes an ID of the target network.

Optionally, the target network is any one of: a PLMN network, an SNPN network, or a CAG network.

Optionally, the access-control configuration information is carried in a system broadcast message or dedicated signaling.

Optionally, if the access-control configuration information is carried in the dedicated signaling, the access-control configuration information further includes timer information. The access-control configuration information in the dedicated signaling is valid before expiry of the timer; otherwise, the access-control configuration information in the dedicated signaling is invalid.

Optionally, the communicating unit 310 is further configured to receive the system broadcast message if the access-control configuration information is carried in the dedicated signaling and the access-control configuration information in the dedicated signaling is invalid. The processing unit 320 is further configured to perform cell access control according to the access-control configuration information carried in the system broadcast message.

Optionally, the communicating unit 310 is specifically configured to obtain the access-control configuration information via an AS. The processing unit 320 is further configured to transfer the access-control configuration information to an NAS via the AS.

Optionally, in some implementations, the communicating unit above may be a communication interface or a transceiver, or may be an input-output interface of a communication chip or system-on-chip (SOC). The processing unit above may be one or more processors.

It should be understood that, the terminal device 300 according to implementations of the disclosure may correspond to the target terminal in the method implementations of the disclosure, and the above and other operations and/or functions of various units of the terminal device 300 are respectively intended for implementing corresponding operations of the target terminal in implementation 1 to implementation 4, which will not be repeated herein for the sake of simplicity.

### Implementation 6

FIG. 4 is a schematic block diagram of a network device 400 according to implementations of the disclosure. As illustrated in FIG. 4, the network device 400 includes a communicating unit 410. The communicating unit 410 is configured to send access-control configuration information, where the access-control configuration information indicates information related to a terminal barred from accessing a target network or allowed to access the target network.

Optionally, the access-control configuration information includes at least one of: information of a terminal type barred from accessing the target network or allowed to access the target network, geographic region information of the terminal barred from accessing the target network or allowed to access the target network, or information related to a serving cell of the terminal barred from accessing the target network or allowed to access the target network.

Optionally, if the access-control configuration information indicates information related to a terminal allowed to access the target network, the access-control configuration information further includes access-probability-control configuration information for the terminal to access the target network.

Optionally, the access-probability-control configuration information includes a probability configuration parameter for the terminal to access the target network.

Optionally, the access-probability-control configuration information further includes a back-off time parameter, where the back-off time parameter is used for determining a minimum waiting duration required before re-initiating a service after the terminal fails to access the target network.

Optionally, the information of the terminal type and the access-probability-control configuration information are in one-to-one correspondence or multiple-to-one correspondence.

Optionally, the geographic region information and the access-probability-control configuration information are in one-to-one correspondence or multiple-to-one correspondence.

Optionally, the information related to the serving cell of the terminal and the access-probability-control configuration information are in one-to-one correspondence or multiple-to-one correspondence.

Optionally, any item in the access-control configuration information is configured at any one of: cell granularity, PLMN granularity, SNPN granularity, CAG granularity, or AC granularity.

Optionally, if any item in the access-control configuration information is configured at the AC granularity, the access-control configuration information further includes an AC ID.

Optionally, the AC ID and the access-probability-control configuration information are in one-to-one correspondence or multiple-to-one correspondence.

Optionally, the terminal type is classified according to at least one of a maximum transmission power level supported by the terminal, an application scenario supported by the terminal, a bandwidth size supported by the terminal, whether the terminal is served in an operator network that the terminal subscribes to, or the number of transmit antennas and/or the number of receive antennas supported by the terminal.

Optionally, the geographic region information includes coordinate information of multiple reference points, or latitude-longitude range information.

Optionally, the information related to the serving cell of the terminal includes at least one of a CGI, a TAC ID, a RANAC ID, frequency-point information, a PCI, beam information, bandwidth configuration information, RAT information, or core-network type information.

Optionally, the access-control configuration information further includes an ID of the target network.

Optionally, the target network is any one of: a PLMN network, an SNPN network, or a CAG network.

Optionally, the access-control configuration information is carried in a system broadcast message or dedicated signaling.

Optionally, if the access-control configuration information is carried in the dedicated signaling, the access-control configuration information further includes timer information. The access-control configuration information in the dedicated signaling is valid before expiry of the timer; otherwise, the access-control configuration information in the dedicated signaling is invalid.

Optionally, the communicating unit 410 is further configured to send the system broadcast message if the access-control configuration information is carried in the dedicated signaling and the access-control configuration information in the dedicated signaling is invalid.

Optionally, in some implementations, the communicating unit above may be a communication interface or a transceiver, or may be an input-output interface of a communication chip or SOC. The processing unit above may be one or more processors.

It should be understood that, the network device 400 according to implementations of the disclosure may correspond to the network device in the method implementations of the disclosure, and the above and other operations and/or functions of various units of the network device 400 are respectively intended for implementing corresponding operations of the network device in implementation 1 to implementation 4, which will not be repeated herein for the sake of simplicity.

### Implementation 7

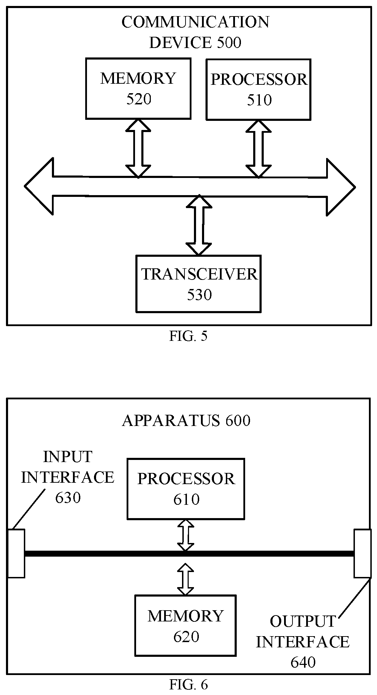

FIG. 5 is a schematic structural diagram of a communication device 500 provided in implementations of the disclosure. The communication device 500 illustrated in FIG. 5 includes a processor 510. The processor 510 can invoke and execute computer programs stored in a memory, to perform the method in implementations of the disclosure.

Optionally, as illustrated in FIG. 5, the communication device 500 may further include the memory 520. The processor 510 can invoke and execute the computer programs stored in the memory 520, to perform the method in implementations of the disclosure.

The memory 520 may be a separate device independent of the processor 510, or may be integrated into the processor 510.

Optionally, as illustrated in FIG. 5, the communication device 500 can further include a transceiver 530. The processor 510 can control the transceiver 530 to communicate with other devices, specifically, to transmit information or data to other devices or to receive information or data transmitted by other devices.

The transceiver 530 may include a transmitter and a receiver. The transceiver 530 may further include an antenna, where one or more antennas can be provided.

Optionally, the communication device 500 may be operable as the network device in implementations of the disclosure, and the communication device 500 can implement the operations performed by the network device in various methods in implementations of the disclosure, which will not be repeated herein for the sake of simplicity.

Optionally, the communication device 500 may be operable as the target terminal in implementations of the disclosure, and the communication device 500 can implement the operations performed by the target terminal in various methods in implementations of the disclosure, which will not be repeated herein for the sake of simplicity.

### Implementation 8

FIG. 6 is a schematic structural diagram of an apparatus according to implementations of the disclosure. The apparatus 600 illustrated in FIG. 6 includes a processor 610. The processor 610 can invoke and execute computer programs stored in a memory to perform the method in implementations of the disclosure.

Optionally, as illustrated in FIG. 6, the apparatus 600 further includes the memory 620. The processor 610 can invoke and execute the computer programs stored in the memory 620 to perform the method in implementations of the disclosure.

The memory 620 may be a separate device independent of the processor 610, or may be integrated into the processor 610.

Optionally, the apparatus 600 may further include an input interface 630. The processor 610 can control the input interface 630 to communicate with other devices or chips, specifically, to obtain information or data transmitted by other devices or chips.

Optionally, the apparatus 600 may further include an output interface 640. The processor 610 can control the output interface 640 to communicate with other devices or chips, specifically, to output information or data to other devices or chips.

Optionally, the apparatus is applicable to the network device in implementations of the disclosure. The apparatus can implement the operations performed by the network device in various methods in implementations of the disclosure, which will not be repeated herein for the sake of simplicity.

Optionally, the apparatus is applicable to the terminal device in implementations of the disclosure. The apparatus can implement the operations performed by the terminal device in various methods in implementations in the disclosure, which will not be repeated herein for the sake of simplicity.

It should be understood that, the apparatus referred to in implementations of the disclosure may also be a chip, such as an SOC.

### Implementation 9

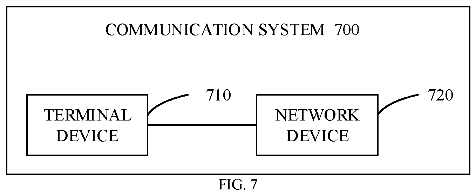

FIG. 7 is a schematic block diagram of a communication system 700 provided in implementations of the disclosure. As illustrated in FIG. 7, the communication system 700 includes a terminal device 710 and a network device 720.

The terminal device 710 can implement functions of the terminal device in the foregoing methods, and the network device 720 can implement functions of the network device or the base station in the foregoing methods, which will not be repeated herein for the sake of simplicity.

It should be understood that, the processor in implementations of the disclosure may be an integrated circuit chip with signal processing capabilities. During implementation, each step of the foregoing method implementations may be completed by an integrated logic circuit of hardware in the processor or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in implementations of the disclosure can be implemented or executed. The general purpose processor may be a microprocessor, or the processor may be any conventional processor or the like. The steps of the method disclosed in implementations of the disclosure may be directly implemented by a hardware decoding processor, or may be performed by hardware and software modules in the decoding processor. The software module can be located in a storage medium such as a random access memory (RAM), a flash memory, a read only memory (ROM), a programmable ROM (PROM), or an electrically erasable programmable memory, registers, and the like. The storage medium is located in the memory. The processor reads the information in the memory, and completes the steps of the method described above with the hardware thereof.

It can be understood that, the memory in implementations of the disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memory of the systems and methods described in the disclosure is intended to include, but is not limited to, these and any other suitable types of memory.

It should be understood that, the memory above is intended for illustration rather than limitation. For example, the memory in implementations of the disclosure may also be an SRAM, a DRAM, an SDRAM, a DDR SDRAM, an ESDRAM, an SLDRAM, a DR RAM, etc. In other words, the memory in implementations of the disclosure is intended to include, but is not limited to, these and any other suitable types of memory.

Implementations of the disclosure further provide a computer-readable storage medium. The computer-readable storage medium is configured to store computer programs.

Optionally, the computer-readable storage medium is applicable to the network device or the base station of implementations of the disclosure. The computer programs are operable with a computer to implement the operations performed by the network device or the base station in various methods in implementations of the disclosure, which will not be repeated herein for the sake of simplicity.

Optionally, the computer-readable storage medium is applicable to the mobile terminal / the terminal device of implementations of the disclosure. The computer programs are operable with a computer to implement the operations performed by the mobile terminal / the terminal device in various methods in implementations of the disclosure, which will not be repeated herein for the sake of simplicity.

Implementations of the disclosure further provide a computer program product. The computer program product includes computer program instructions.

Optionally, the computer program product is applicable to the network device or the base station of implementations of the disclosure. The computer program instructions are operable with a computer to implement the operations performed by the network device or the base station in various methods in implementations of the disclosure, which will not be repeated herein for the sake of simplicity.

Optionally, the computer program product is applicable to the mobile terminal / the terminal device of implementations of the disclosure. The computer program instructions are operable with a computer to implement the operations performed by the mobile terminal / the terminal device in various methods in implementations of the disclosure, which will not be repeated herein for the sake of simplicity.

Implementations of the disclosure further provide a computer program.

Optionally, the computer program is applicable to the network device or the base station of implementations of the disclosure. The computer program, when executed by a computer, is operable with the computer to implement the operations performed by the network device or the base station in various methods in implementations of the disclosure, which will not be repeated herein for the sake of simplicity.

Optionally, the computer program is applicable to the mobile terminal / the terminal device of implementations of the disclosure. The computer program, when executed by a computer, is operable with the computer to implement the operations performed by the mobile terminal / the terminal device in various methods in implementations of the disclosure, which will not be repeated herein for the sake of simplicity.

Those of ordinary skill in the art will appreciate that units and algorithmic operations of various examples described in connection with implementations of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the invention as defined by the appended claims.

It will be evident to those skilled in the art that, for the sake of convenience and simplicity, in terms of the specific working processes of the foregoing systems, apparatuses, and units, reference can be made to the corresponding processes in the foregoing method implementations, which will not be repeated herein.

It will be appreciated that the systems, apparatuses, and methods disclosed in implementations of the disclosure may also be implemented in various other manners. For example, the above apparatus implementations are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various implementations of the disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the prior art, or part of the technical solution of the disclosure may be embodied as software products. The computer software products can be stored in a storage medium and may include multiple instructions that, when executed, can cause a computing device, e.g., a personal computer, a server, a network device, etc., to execute some or all operations of the methods described in various implementations of the disclosure. The above storage medium may include various kinds of media that can store program codes, such as a universal serial bus (USB) flash disk, a mobile hard drive, a ROM, a RAM, a magnetic disk, or an optical disk.

## Claims

1. A wireless communication method, comprising:
obtaining (S210) access-control configuration information; and
performing (S220) cell access control according to the access-control configuration information, wherein
the access-control configuration information indicates information related to a terminal barred from accessing a target network or allowed to access the target network,
wherein the access-control configuration information comprises:
information of a terminal type barred from accessing the target network or allowed to access the target network;
**characterised in that**
the terminal type is classified according to: an application scenario supported by the terminal, or a number of transmit antennas and/or a number of receive antennas supported by the terminal, wherein the application scenario is one of: the terminal supports only terrestrial communication, the terminal supports only satellite communication, or the terminal supports both terrestrial communication and satellite communication.

2. The method of claim 1, wherein the access-control configuration information further comprises at least one of:
geographic region information of the terminal barred from accessing the target network or allowed to access the target network; or
information related to a serving cell of the terminal barred from accessing the target network or allowed to access the target network.

3. The method of claim 1 or 2, wherein when the access-control configuration information indicates information related to a terminal allowed to access the target network, the access-control configuration information further comprises:
access-probability-control configuration information for the terminal to access the target network.

4. The method of claim 3, wherein the access-probability-control configuration information comprises a probability configuration parameter for the terminal to access the target network, or the access-probability-control configuration information comprises the probability configuration parameter and a back-off time parameter, wherein the back-off time parameter is used for determining a minimum waiting duration required before re-initiating a service after the terminal fails to access the target network.

5. The method of claim 3 or 4, wherein one of:
the information of the terminal type and the access-probability-control configuration information are in one-to-one correspondence or multiple-to-one correspondence;
the geographic region information and the access-probability-control configuration information are in one-to-one correspondence or multiple-to-one correspondence;
the information related to the serving cell of the terminal and the access-probability-control configuration information are in one-to-one correspondence or multiple-to-one correspondence.

6. The method of any of claims 3 to 5, wherein any item in the access-control configuration information is configured at any one of: cell granularity, public land mobile network, PLMN, granularity, stand-alone non-public network, SNPN, granularity, closed access group, CAG, granularity, or access category, AC, granularity.

7. The method of claim 6, wherein when any item in the access-control configuration information is configured at the AC granularity, the access-control configuration information further comprises an AC identity, ID, wherein the AC ID and the access-probability-control configuration information are in one-to-one correspondence or multiple-to-one correspondence.

8. The method of any of claims 1 to 7, wherein the access-control configuration information is carried in a system broadcast message or dedicated signaling, wherein when the access-control configuration information is carried in the dedicated signaling, the access-control configuration information further comprises timer information, wherein
the access-control configuration information in the dedicated signaling is valid before expiry of the timer; otherwise, the access-control configuration information in the dedicated signaling is invalid;
wherein when the access-control configuration information is carried in the dedicated signaling and the access-control configuration information in the dedicated signaling is invalid, the method further comprises:
receiving the system broadcast message; and
performing cell access control according to the access-control configuration information carried in the system broadcast message.

9. The method of any of claims 1 to 8, wherein
obtaining the access-control configuration information comprises:
obtaining the access-control configuration information via an access stratum, AS; and
accordingly, the method further comprises:
transferring the access-control configuration information to a non-access stratum, NAS, via the AS.

10. The method of any of claims 1 to 9, wherein the terminal type is classified further according to at least one of:
a maximum transmission power level supported by the terminal;
a bandwidth size supported by the terminal; or
whether the terminal is served in an operator network that the terminal subscribes to.

11. A network device, comprising:
a communicating unit (410) configured to send access-control configuration information, wherein
the access-control configuration information indicates information related to a terminal barred from accessing a target network or allowed to access the target network;
wherein the access-control configuration information comprises:
information of a terminal type barred from accessing the target network or allowed to access the target network;
**characterised in that**
the terminal type is classified according to: an application scenario supported by the terminal, or a number of transmit antennas and/or a number of receive antennas supported by the terminal, wherein the application scenario is one of: the terminal supports only terrestrial communication, the terminal supports only satellite communication, or the terminal supports both terrestrial communication and satellite communication.

12. A terminal device, comprising:
a communicating unit (310) configured to obtain access-control configuration information; and
a processing unit (320) configured to perform cell access control according to the access-control configuration information, wherein
the access-control configuration information indicates information related to a terminal barred from accessing a target network or allowed to access the target network,
wherein the access-control configuration information comprises:
information of a terminal type barred from accessing the target network or allowed to access the target network;
**characterised in that**
the terminal type is classified according to: an application scenario supported by the terminal, or a number of transmit antennas and/or a number of receive antennas supported by the terminal, wherein the application scenario is one of: the terminal supports only terrestrial communication, the terminal supports only satellite communication, or the terminal supports both terrestrial communication and satellite communication.

13. The terminal device of claim 12, wherein when the access-control configuration information indicates information related to a terminal allowed to access the target network, the access-control configuration information further comprises:
access-probability-control configuration information for the terminal to access the target network.

14. The terminal device of claim 13, wherein the access-probability-control configuration information comprises a probability configuration parameter for the terminal to access the target network, or the access-probability-control configuration information comprises the probability configuration parameter and a back-off time parameter, wherein the back-off time parameter is used for determining a minimum waiting duration required before re-initiating a service after the terminal fails to access the target network.

15. The terminal device of any of claims 12 to 14, wherein the terminal type is classified further according to at least one of:
a maximum transmission power level supported by the terminal;
a bandwidth size supported by the terminal; or
whether the terminal is served in an operator network that the terminal subscribes to.

## Patentansprüche

1. Drahtloskommunikationsverfahren, umfassend:
Erhalten (S210) von Zugriffskontroll-Konfigurationsinformationen; und
Durchführen (S220) einer Zugriffskontrolle auf eine Zelle gemäß den Zugriffskontroll-Konfigurationsinformationen, wobei
die Zugriffskontroll-Konfigurationsinformationen Informationen angeben, die sich darauf beziehen, ob eine Endgerätevorrichtung am Zugriff auf ein Zielnetzwerk gehindert ist oder zum Zugriff auf das Zielnetzwerk berechtigt ist,
wobei die Zugriffskontroll-Konfigurationsinformationen umfassen:
Informationen über einen Typ einer Endgerätevorrichtung, der am Zugriff auf das Zielnetzwerk gehindert ist oder zum Zugriff auf das Zielnetzwerk berechtigt ist;
**dadurch gekennzeichnet, dass**
der Typ der Endgerätevorrichtung gemäß Folgendem klassifiziert ist: einem durch die Endgerätevorrichtung unterstützten Anwendungsszenario oder einer Anzahl von Sendeantennen und/oder einer Anzahl von Empfangsantennen, die durch die Endgerätevorrichtung unterstützt werden, wobei das Anwendungsszenario eines der Folgenden ist: die Endgerätevorrichtung unterstützt ausschließlich terrestrische Kommunikation, die Endgerätevorrichtung unterstützt ausschließlich Satellitenkommunikation, oder die Endgerätevorrichtung unterstützt sowohl terrestrische Kommunikation als auch Satellitenkommunikation.

2. Verfahren nach Anspruch 1, wobei die Zugriffskontroll-Konfigurationsinformationen mindestens eines der Folgenden umfassen:
geografische Regionsinformationen einer Endgerätevorrichtung, die am Zugriff auf das Zielnetzwerk gehindert ist oder zum Zugriff auf das Zielnetzwerk berechtigt ist; oder
Informationen in Bezug auf eine bedienende Zelle der Endgerätevorrichtung, die am Zugriff auf das Zielnetzwerk gehindert ist oder zum Zugriff auf das Zielnetzwerk berechtigt ist.

3. Verfahren nach Anspruch 1 oder 2, wobei, wenn die Zugriffskontroll-Konfigurationsinformationen Informationen in Bezug auf eine Endgerätevorrichtung angeben, die zum Zugriff auf das Zielnetz berechtigt ist, die Zugriffskontroll-Konfigurationsinformationen ferner umfassen:
Zugriffs-Wahrscheinlichkeits-Konfigurationsinformationen für den Zugriff der Endgerätevorrichtung auf das Zielnetz.

4. Verfahren nach Anspruch 3, wobei die Zugriffs-Wahrscheinlichkeits-Konfigurationsinformationen einen Wahrscheinlichkeits-Konfigurationsparameter für den Zugriff der Endgerätevorrichtung auf das Zielnetzwerk umfassen, oder wobei die Zugriffs-Wahrscheinlichkeits-Konfigurationsinformationen den Wahrscheinlichkeits-Konfigurationsparameter und einen Backoff-Zeitparameter umfassen, wobei der Backoff-Zeitparameter dazu verwendet wird, eine Mindestwartezeitdauer zu bestimmen, die erforderlich ist, bevor nach einem fehlgeschlagenen Zugriff der Endgerätevorrichtung auf das Zielnetzwerk ein Dienst erneut initiiert wird.

5. Verfahren nach Anspruch 3 oder 4, wobei eines der folgenden Merkmale zutrifft:
die Informationen des Typs der Endgerätevorrichtung und die Zugriffs-Wahrscheinlichkeits-Konfigurationsinformationen stehen in einer Eins-zu-eins-Entsprechung oder in einer Mehr-zu-eins-Entsprechung; oder
die geografischen Regionsinformationen und die Zugriffs-Wahrscheinlichkeits-Konfigurationsinformationen stehen in einer Eins-zu-eins-Entsprechung oder in einer Mehr-zu-eins-Entsprechung; oder
die Informationen in Bezug auf die Dienerzelle der Endgerätevorrichtung und die Zugriffs-Wahrscheinlichkeits-Konfigurationsinformationen stehen in einer Eins-zu-eins-Entsprechung oder in einer Mehrzu-eins-Entsprechung.

6. Verfahren nach einem der Ansprüche 3 bis 5, wobei jedes Element der Zugriffskontroll-Konfigurationsinformationen mit einer der folgenden Granularitäten konfiguriert ist: Zell-Granularität, Granularität des öffentlichen landgestützten Mobilfunknetzwerks (Public Land Mobile Network, PLMN), eigenständige nicht-öffentliche Netzwerk-Granularität (Stand-Alone Non-Public Network, SNPN), Granularität einer geschlossenen Zugriffsgruppe (Closed Access Group, CAG) oder Granularität der Zugriffskategorie (Access Category, AC).

7. Verfahren nach Anspruch 6, wobei, wenn ein Element der Zugriffskontroll-Konfigurationsinformationen mit der AC-Granularität konfiguriert ist, die Zugriffskontroll-Konfigurationsinformationen ferner eine AC-Identität (AC-ID) umfassen, wobei die AC-ID und die Zugriffs-Wahrscheinlichkeits-Konfigurationsinformationen in einer Eins-zu-eins-Entsprechung oder in einer Mehr-zu-eins-Entsprechung stehen.

8. Verfahren nach einem der Ansprüche 1 bis 7, wobei die Zugriffskontroll-Konfigurationsinformationen in einer Systemrundsendemeldung oder in einer dedizierten Signalisierung übertragen werden, wobei, wenn die Zugriffskontroll-Konfigurationsinformationen in der dedizierten Signalisierung übertragen werden, die Zugriffskontroll-Konfigurationsinformationen ferner Timer-Informationen umfassen, wobei
die Zugriffskontroll-Konfigurationsinformationen in der dedizierten Signalisierung gültig sind, bevor der Timer abläuft, und andernfalls die Zugriffskontroll-Konfigurationsinformationen in der dedizierten Signalisierung ungültig sind;
wobei, wenn die Zugriffskontroll-Konfigurationsinformationen in der dedizierten Signalisierung übertragen werden und die Zugriffskontroll-Konfigurationsinformationen in der dedizierten Signalisierung ungültig sind, das Verfahren ferner umfasst:
Empfangen der Systemrundsendemeldung; und
Durchführen einer Zellzugriffskontrolle gemäß den Zugriffskontroll-Konfigurationsinformationen, die in der Systemrundsendemeldung übertragen werden.

9. Verfahren nach einem der Ansprüche 1 bis 8, wobei das Erhalten der Zugriffskontroll-Konfigurationsinformationen umfasst:
Erhalten der Zugriffskontroll-Konfigurationsinformationen über eine Zugriffsschicht (Access Stratum, AS); und
dementsprechend das Verfahren ferner umfasst:
Übertragen der Zugriffskontroll-Konfigurationsinformationen über die AS an eine Nicht-Zugriffsschicht (Non-Access Stratum, NAS).

10. Verfahren nach einem der Ansprüche 1 bis 9, wobei der Typ der Endgerätevorrichtung ferner gemäß mindestens einem der Folgenden klassifiziert wird:
einem maximalen von der Endgerätevorrichtung unterstützten Sendeleistungspegel;
einer von der Endgerätevorrichtung unterstützten Bandbreitengröße; oder
ob die Endgerätevorrichtung in einem Betreibernetz bedient wird, bei dem die Endgerätevorrichtung subskribiert ist.

11. Netzwerkvorrichtung, umfassend:
eine Kommunikationseinheit (410), die dazu konfiguriert ist, Zugriffskontroll-Konfigurationsinformationen zu senden, wobei
die Zugriffskontroll-Konfigurationsinformationen Informationen angeben, die sich darauf beziehen, ob eine Endgerätevorrichtung am Zugriff auf ein Zielnetzwerk gehindert ist oder zum Zugriff auf das Zielnetzwerk berechtigt ist;
wobei die Zugriffskontroll-Konfigurationsinformationen umfassen:
Informationen über einen Typ einer Endgerätevorrichtung, der am Zugriff auf das Zielnetzwerk gehindert ist oder zum Zugriff auf das Zielnetzwerk berechtigt ist;
**dadurch gekennzeichnet, dass**
der Typ der Endgerätevorrichtung gemäß Folgendem klassifiziert ist: einem durch die Endgerätevorrichtung unterstützten Anwendungsszenario oder einer Anzahl von Sendeantennen und/oder einer Anzahl von Empfangsantennen, die durch die Endgerätevorrichtung unterstützt werden, wobei das Anwendungsszenario eines der Folgenden ist: die Endgerätevorrichtung unterstützt ausschließlich terrestrische Kommunikation, die Endgerätevorrichtung unterstützt ausschließlich Satellitenkommunikation, oder die Endgerätevorrichtung unterstützt sowohl terrestrische Kommunikation als auch Satellitenkommunikation.

12. Endgerätevorrichtung, umfassend
eine Kommunikationseinheit (310), die dazu konfiguriert ist, Zugriffskontroll-Konfigurationsinformationen zu erhalten, und
eine Verarbeitungseinheit (320), die dazu konfiguriert ist, eine Zugriffskontrolle auf eine Zelle gemäß den Zugriffskontroll-Konfigurationsinformationen durchzuführen, wobei
die Zugriffskontroll-Konfigurationsinformationen Informationen angeben, die sich darauf beziehen, ob eine Endgerätevorrichtung am Zugriff auf ein Zielnetzwerk gehindert ist oder zum Zugriff auf das Zielnetzwerk berechtigt ist,
wobei die Zugriffskontroll-Konfigurationsinformationen umfassen:
Informationen über einen Typ einer Endgerätevorrichtung, der am Zugriff auf das Zielnetzwerk gehindert ist oder zum Zugriff auf das Zielnetzwerk berechtigt ist;
**dadurch gekennzeichnet, dass**
der Typ der Endgerätevorrichtung gemäß einem der Folgenden klassifiziert ist: einem von der Endgerätevorrichtung unterstützten Anwendungsszenario, oder einer Anzahl von Sendeantennen und/oder einer Anzahl von Empfangsantennen, die durch die Endgerätevorrichtung unterstützt werden, wobei das Anwendungsszenario eines der Folgenden ist: die Endgerätevorrichtung unterstützt ausschließlich terrestrische Kommunikation, die Endgerätevorrichtung unterstützt ausschließlich Satellitenkommunikation, oder die Endgerätevorrichtung unterstützt sowohl terrestrische Kommunikation als auch Satellitenkommunikation.

13. Endgerätevorrichtung nach Anspruch 12, wobei, wenn die Zugriffskontroll-Konfigurationsinformationen Informationen in Bezug auf eine Endgerätevorrichtung angeben, die zum Zugriff auf das Zielnetz berechtigt ist, die Zugriffskontroll-Konfigurationsinformationen ferner umfassen:
Zugriffs-Wahrscheinlichkeits-Konfigurationsinformationen für den Zugriff der Endgerätevorrichtung auf das Zielnetz.

14. Endgerätevorrichtung nach Anspruch 13, wobei die Zugriffs-Wahrscheinlichkeits-Konfigurationsinformationen einen Wahrscheinlichkeits-Konfigurationsparameter für den Zugriff der Endgerätevorrichtung auf das Zielnetzwerk umfassen, oder wobei die Zugriffs-Wahrscheinlichkeits-Konfigurationsinformationen den Wahrscheinlichkeits-Konfigurationsparameter und einen Backoff-Zeitparameter umfassen, wobei der Backoff-Zeitparameter dazu verwendet wird, eine Mindestwartezeitdauer zu bestimmen, die erforderlich ist, bevor nach einem fehlgeschlagenen Zugriff der Endgerätevorrichtung auf das Zielnetzwerk ein Dienst erneut initiiert wird.

15. Endgerätevorrichtung nach einem der Ansprüche 12 bis 14, wobei der Typ der Endgerätevorrichtung ferner gemäß mindestens einem der Folgenden klassifiziert wird:
einem maximalen von der Endgerätevorrichtung unterstützten Sendeleistungspegel;
einer von der Endgerätevorrichtung unterstützten Bandbreitengröße; oder
ob die Endgerätevorrichtung in einem Betreibernetz bedient wird, bei dem die Endgerätevorrichtung subskribiert ist.

## Revendications

1. Procédé de communication sans fil, comprenant :
l'obtention (S210) d'informations de configuration de contrôle d'accès ; et
la réalisation (S220) d'un contrôle d'accès à une cellule selon les informations de configuration de contrôle d'accès, dans lequel
les informations de configuration de contrôle d'accès indiquent des informations connexes à un terminal interdit d'accéder à un réseau cible ou permis d'accéder au réseau cible,
dans lequel les informations de configuration de contrôle d'accès comprennent :
des informations d'un type de terminal interdit d'accéder au réseau cible ou permis d'accéder au réseau cible ;
**caractérisé en ce que**
le type de terminal est classifié selon : un scénario d'application pris en charge par le terminal, ou un nombre d'antennes de transmission et/ou un nombre d'antennes de réception pris en charge par le terminal, dans lequel le scénario d'application est un scénario parmi : le terminal prend seulement en charge une communication terrestre, le terminal prend seulement en charge une communication satellite, ou le terminal prend en charge les deux d'une communication terrestre et d'une communication satellite.

2. Procédé de la revendication 1, dans lequel les informations de configuration de contrôle d'accès comprennent en outre au moins un type d'informations parmi :
des informations de région géographique du terminal interdit d'accéder au réseau cible ou permis d'accéder au réseau cible ; ou
des informations connexes à une cellule de desserte du terminal interdit d'accéder au réseau cible ou permis d'accéder au réseau cible.

3. Procédé de la revendication 1 ou 2, dans lequel, lorsque les informations de configuration de contrôle d'accès indiquent des informations connexes à un terminal permis d'accéder au réseau cible, les informations de configuration de contrôle d'accès comprennent en outre :
des informations de configuration de contrôle de probabilité d'accès pour que le terminal accède au réseau cible.

4. Procédé de la revendication 3, dans lequel les informations de configuration de contrôle de probabilité d'accès comprennent un paramètre de configuration de probabilité pour que le terminal accède au réseau cible, ou les informations de configuration de contrôle de probabilité d'accès comprennent le paramètre de configuration de probabilité et un paramètre de temps de retrait, dans lequel le paramètre de temps de retrait est utilisé pour déterminer une durée d'attente minimum nécessaire avant la réinitialisation d'un service après que le terminal n'arrive pas à accéder au réseau cible.

5. Procédé de la revendication 3 ou 4, dans lequel un cas parmi :
les informations du type de terminal et les informations de configuration de contrôle de probabilité d'accès sont en correspondance une-à-une ou en correspondance multiple-à-une ;
les informations de région géographique et les informations de configuration de contrôle de probabilité d'accès sont en correspondance une-à-une ou en correspondance multiple-à-une ;
les informations connexes à la cellule de desserte du terminal et les informations de configuration de contrôle de probabilité d'accès sont en correspondance une-à-une ou en correspondance multiple-à-une.

6. Procédé de quelconques des revendications 3 à 5, dans lequel un quelconque élément dans les informations de configuration de contrôle d'accès est configuré à une granularité quelconque parmi : granularité de cellule, granularité de réseau mobile terrestre public « Public Land mobile Network », PLMN, granularité de réseau non public autonome « Stand-alone Non-Public Network » SNPN, granularité de groupe d'accès fermé « Closed Access Group » CAG, ou granularité de catégorie d'accès « Access Category » AC.

7. Procédé de la revendication 6, dans lequel, lorsqu'un quelconque élément dans les informations de configuration de contrôle d'accès est configuré à la granularité d'AC, les informations de configuration de contrôle d'accès comprennent en outre une identification, ID, d'AC, dans lequel l'ID d'AC et les informations de configuration de contrôle de probabilité d'accès sont en correspondance une-à-une ou en correspondance multiple-à-une.

8. Procédé de quelconques des revendications 1 à 7, dans lequel les informations de configuration de contrôle d'accès sont portées dans un message de diffusion de système ou une signalisation réservée, dans lequel, lorsque les informations de configuration de contrôle d'accès sont portées dans la signalisation réservée, les informations de configuration de contrôle d'accès comprennent en outre des informations de minuterie, dans lequel
les informations de configuration de contrôle d'accès dans la signalisation réservée sont valides avant l'expiration de la minuterie ; autrement, les informations de configuration de contrôle d'accès dans la signalisation réservée sont invalides ;
dans lequel, lorsque les informations de configuration de contrôle d'accès sont portées dans la signalisation réservée et les informations de configuration de contrôle d'accès dans la signalisation réservée sont invalides, le procédé comprend en outre :
la réception du message de diffusion de système ; et
la réalisation d'un contrôle d'accès à une cellule selon les informations de configuration de contrôle d'accès portées dans le message de diffusion de système.

9. Procédé de quelconques des revendications 1 à 8, dans lequel
l'obtention des informations de configuration de contrôle d'accès comprend :
l'obtention des informations de configuration de contrôle d'accès par l'intermédiaire d'une strate d'accès, « Access Stratum » AS ; et
par conséquent, le procédé comprend en outre :
le transfert des informations de configuration de contrôle d'accès à une strate de non-accès, « Non-Access Stratum » NAS, par l'intermédiaire de la AS.

10. Procédé de quelconques des revendications 1 à 9, dans lequel le type de terminal est classifié en outre selon au moins un composant parmi :
un niveau de puissance de transmission maximum pris en charge par le terminal ;
une taille de largeur de bande prise en charge par le terminal ; ou
le fait que le terminal est, ou n'est pas, desservi dans un réseau d'opérateur auquel le terminal est abonné.

11. Dispositif de réseau, comprenant :
une unité de communication (410) configurée pour envoyer des informations de configuration de contrôle d'accès, dans lequel
les informations de configuration de contrôle d'accès indiquent des informations connexes à un terminal interdit d'accéder à un réseau cible ou permis d'accéder au réseau cible ;
dans lequel les informations de configuration de contrôle d'accès comprennent :
des informations d'un type de terminal interdit d'accéder au réseau cible ou permis d'accéder au réseau cible ;
**caractérisé en ce que**
le type de terminal est classifié selon : un scénario d'application pris en charge par le terminal, ou un nombre d'antennes de transmission et/ou un nombre d'antennes de réception pris en charge par le terminal, dans lequel le scénario d'application est un scénario parmi : le terminal prend seulement en charge une communication terrestre, le terminal prend seulement en charge une communication satellite, ou le terminal prend en charge les deux d'une communication terrestre et d'une communication satellite.

12. Dispositif de terminal, comprenant :
une unité de communication (310) configurée pour obtenir des informations de configuration de contrôle d'accès ; et
une unité de traitement (320) configurée pour réaliser un contrôle d'accès à une cellule selon les informations de configuration de contrôle d'accès, dans lequel
les informations de configuration de contrôle d'accès indiquent des informations connexes à un terminal interdit d'accéder à un réseau cible ou permis d'accéder au réseau cible,
dans lequel les informations de configuration de contrôle d'accès comprennent :
des informations d'un type de terminal interdit d'accéder au réseau cible ou permis d'accéder au réseau cible ;
**caractérisé en ce que**
le type de terminal est classifié selon : un scénario d'application pris en charge par le terminal, ou un nombre d'antennes de transmission et/ou un nombre d'antennes de réception pris en charge par le terminal, dans lequel le scénario d'application est un scénario parmi : le terminal prend seulement en charge une communication terrestre, le terminal prend seulement en charge une communication satellite, ou le terminal prend en charge les deux d'une communication terrestre et d'une communication satellite.

13. Dispositif de terminal de la revendication 12, dans lequel, lorsque les informations de configuration de contrôle d'accès indiquent des informations connexes à un terminal permis d'accéder au réseau cible, les informations de configuration de contrôle d'accès comprennent en outre :
des informations de configuration de contrôle de probabilité d'accès pour que le terminal accède au réseau cible.

14. Dispositif de terminal de la revendication 13, dans lequel les informations de configuration de contrôle de probabilité d'accès comprennent un paramètre de configuration de probabilité pour que le terminal accède au réseau cible, ou les informations de configuration de contrôle de probabilité d'accès comprennent le paramètre de configuration de probabilité et un paramètre de temps de retrait, dans lequel le paramètre de temps de retrait est utilisé pour déterminer une durée d'attente minimum nécessaire avant la réinitialisation d'un service après que le terminal n'arrive pas à accéder au réseau cible.

15. Dispositif de terminal de quelconques des revendications 12 à 14, dans lequel le type de terminal est classifié en outre selon au moins un composant parmi :
un niveau de puissance de transmission maximum pris en charge par le terminal ;
une taille de largeur de bande prise en charge par le terminal ; ou
le fait que le terminal est, ou n'est pas, desservi dans un réseau d'opérateur auquel le terminal est abonné.
